(19) Europäisches Patentamt
European Patent Office
Office européen des brevets

(11) **EP 4 159 804 A1**

(12) **EUROPEAN PATENT APPLICATION**
published in accordance with Art. 153(4) EPC

(43) Date of publication:
**05.04.2023 Bulletin 2023/14**

(21) Application number: **21812648.0**

(22) Date of filing: **27.05.2021**

(51) International Patent Classification (IPC):
*C08K 5/49* (2006.01)       *C08L 23/00* (2006.01)
*C08L 23/10* (2006.01)       *C08K 3/32* (2006.01)

(52) Cooperative Patent Classification (CPC):
**C08K 3/32; C08K 5/49; C08L 23/00; C08L 23/10**

(86) International application number:
**PCT/JP2021/020189**

(87) International publication number:
**WO 2021/241682 (02.12.2021 Gazette 2021/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 28.05.2020   JP 2020093089
18.03.2021   JP 2021044430

(71) Applicant: **Mitsubishi Chemical Corporation**
**Chiyoda-ku**
**Tokyo 100-8251 (JP)**

(72) Inventors:
• UENO, Naofumi
Tokyo 100-8251 (JP)
• KIWA, Ai
Tokyo 100-8251 (JP)
• YOKOHAMA, Hisaya
Tokyo 100-8251 (JP)
• NISHII, Hiroyuki
Tokyo 100-8251 (JP)

(74) Representative: **Vossius & Partner**
**Patentanwälte Rechtsanwälte mbB**
**Siebertstraße 3**
**81675 München (DE)**

(54) **RESIN COMPOSITION AND MOLDED BODY**

(57)    The resin composition according to one aspect of the present invention includes a thermoplastic resin (A), a phosphorus-containing flame retardant (B), and a copolymer (C) of an $\alpha$-olefin and an unsaturated carboxylic acid, wherein: a ratio of the phosphorus-containing flame retardant (B) to the thermoplastic resin (A) is 5 % by mass or more and 400 % by mass or less, and a ratio of the copolymer (C) to the phosphorus-containing flame retardant (B) is 10 % by mass or less.

**Description**

[Technical Field]

The present invention relates to a resin composition and a molded product.
Priorities are claimed on Japanese Patent Application No. 2020-93089, filed May 28, 2020, and Japanese Patent Application No. 2021-44430, filed March 18, 2021, the contents of which are incorporated herein by reference.

[Background Art]

Polyolefin resins are excellent in mechanical properties (flexural properties, tensile properties, etc.), chemical resistance, moldability, etc., as well as having a low specific gravity and being inexpensive. Therefore, molded products of polyolefin resins are used in various applications such as machinery, electric/electronic equipment, OA equipment, automobile interior and exterior materials, and electric automobiles.
In these applications, the molded products are in some cases required to be flame retardant. For example, molded products used as housings (frames, casings, exteriors, covers, etc.) of electrical/electronic equipment and OA equipment, cables, etc. are required to have high flame retardancy.
Since polyolefin resins are highly flammable, a flame retardant is added to impart flame retardancy to the molded products.
Conventionally, as a flame retardant, a system using a combination of a brominated flame retardant and an antimony compound has been used because of low cost and highly flame retardancy. However, such system poses a problem of persistence in living organisms and, hence, has been being replaced by phosphorus-containing flame retardants in recent years.
Patent Literature 1 proposes a polyolefin resin composition containing two specific phosphorus-containing flame retardants.
On the other hand, Patent Literature 2 proposes to use an alkyl methacrylate polymer mainly composed mainly of an alkyl methacrylate unit having an alkyl group with 2 or more carbon atoms as a dispersant for additives for polyolefin, such as flame retardants and crystal nucleating agents, and a resin composition containing such a dispersant, additives for polyolefin, and a polyolefin resin.
Further, Patent Literature 3 proposes a flame-retardant resin composition composed of an olefin polymer, an ethylene polymer containing a maleic anhydride component, and a flame retardant. Furthermore, Patent Literature 4 proposes a non-halogen flame retardant resin composition containing a specific amount of terpolymer of ethylene, an α-olefin having a polar group and maleic anhydride, and a specific amount (180 to 250 parts by mass) of a non-halogen flame retardant.

[Citation List]

[Patent Literature]

    Patent Literature 1: Japanese Unexamined Patent Application Publication No. 2013-119575
    Patent Literature 2: International Patent Application Publication No. 2011/96596
    Patent Literature 3: Japanese Unexamined Patent Application Publication No. Hei 5-117452
    Patent Literature 1: Japanese Unexamined Patent Application Publication No. 2014-91753

[Summary of Invention]

[Technical Problem]

However, the resin composition described in Patent Literature 1 has a problem in that the dispersibility of the phosphorus-containing flame retardant is poor, and the phosphorus-containing flame retardant defectively dispersed in the molded product causes poor appearance.
The resin composition described in Patent Literature 2 contains a large amount of dispersant, which may impair the excellent physical properties of the polyolefin resin such as mechanical properties.
With regard to Patent Literatures 3 and 4, it has been found that the compositions described in these literatures do not necessarily provide molded products having high flame retardancy while securing sufficient mechanical strength and flexural modulus.

An object of the present invention is to provide a resin composition in which a phosphorus-containing flame retardant is well dispersed and which can exhibit excellent flame retardancy while sufficiently maintaining the inherent physical properties of polyolefin resins, and a molded product thereof.

[Solution to Problem]

The embodiments of the present invention are as follows.

[1] A resin composition including a thermoplastic resin (A), a phosphorus-containing flame retardant (B), and a copolymer (C) of an $\alpha$-olefin and an unsaturated carboxylic acid, wherein: a ratio of the phosphorus-containing flame retardant (B) to the thermoplastic resin (A) is 5 % by mass or more and 400 % by mass or less, and a ratio of the copolymer (C) to the phosphorus-containing flame retardant (B) is 10 % by mass or less.
[2] The resin composition according to [1], wherein a proportion of the thermoplastic resin (A) to a total mass of the resin composition is 20 % by mass or more and 85 % by mass or less.
[3] The resin composition according to [1] or [2], wherein the copolymer (C) is a copolymer of an $\alpha$-olefin and maleic anhydride.
[4] The resin composition according to any one of [1] to [3], wherein the thermoplastic resin (A) is a polyolefin resin.
[5] A molded product including the resin composition of any one of [1] to [4].

[Advantageous Effects of Invention]

The present invention can provide a resin composition in which a phosphorus-containing flame retardant is well dispersed and which can exhibit excellent flame retardancy while sufficiently maintaining the inherent physical properties of polyolefin resins, and a molded product thereof.

[Description of Embodiments]

[Resin composition]

The resin composition according to one aspect of the present invention (hereinafter, also referred to as "present resin composition") includes a thermoplastic resin (A), a phosphorus-containing flame retardant (B), and a copolymer (C) of an $\alpha$-olefin and an unsaturated carboxylic acid, wherein: a ratio of the phosphorus-containing flame retardant (B) to (100 % by mass of) the thermoplastic resin (A) is 5 % by mass or more and 400 % by mass or less, and a ratio of the copolymer (C) to (100 % by mass of) the phosphorus-containing flame retardant (B) is 10 % by mass or less.
The above configuration of the present resin composition enables production of a molded product having high flame retardancy with less decrease in mechanical properties.
Since the copolymer (C) of an $\alpha$-olefin and an unsaturated carboxylic acid has portions with high affinity for the thermoplastic resin (A) and the phosphorus-containing flame retardant (B), respectively, the copolymer (C) present in an appropriate amount allows the phosphorus-containing flame retardant (B) to be satisfactorily dispersed in the thermoplastic resin (A). Therefore, deterioration of mechanical properties due to agglomeration of the phosphorus-containing flame retardant (B) can be prevented. On the other hand, while an improvement in flame retardancy due to the dispersion effect of the phosphorus-containing flame retardant (B) can be expected, the copolymer (C) of an $\alpha$-olefin and an unsaturated carboxylic acid tends to burn easily. Therefore, if the amount of the polymer (C) is too large, many of the copolymer (C) results in being positioned on the surface of the molded product, which in turn decreases the flame retardancy of the molded product. Therefore, the presence of the thermoplastic resin (A), the phosphorus-containing flame retardant (B), and the copolymer (C) of an $\alpha$-olefin and an unsaturated carboxylic acid in respective amounts within appropriate ranges makes it possible to provide a resin composition that can produce a molded product showing high flame retardancy with less deterioration of mechanical properties.
The present resin composition may further contain other flame retardants or auxiliary flame retardants other than the phosphorus-containing flame retardant (B).
The present resin composition may further contain other components than those described above, if necessary, as long as the effects of the present invention are not impaired.

[Thermoplastic resin (A)]

Examples of the thermoplastic resins include, but are not particularly limited to, polyolefin resins, polycarbonate resins, polyester resins, acrylonitrile-styrene resins, ABS resins, polyamide resins, and modified polyphenylene oxide. One of these may be used alone, or two or more of these may be used in combination. For example, the thermoplastic resin (A) may be a composite resin of two or more of the above thermoplastic resins.

The polyolefin resin is not particularly limited, and examples thereof include the resins described later. The polyester resin is not particularly limited, and examples thereof include polybutylene terephthalate. The polyamide resin is not particularly limited, and examples thereof include nylon 66 and nylon 6.

The present invention is particularly useful when the thermoplastic resin (A) is a polyolefin resin. In the present invention, the term "polyolefin resin" means a resin in which olefin units or cycloolefin units account for 90 mol% or more in terms of a proportion with respect to 100 mol% of all structural units constituting the resin.

The proportion of olefin units or cycloolefin units with respect to 100 mol% of all structural units constituting the polyolefin resin is preferably 95 mol% or more, particularly preferably 98 mol% or more.

Examples of the polyolefin resin include α-olefin polymers, such as polyethylene, polypropylene, polybutene, poly(3-methyl-1-butene), poly(3-methyl-1-pentene), and poly(4-methyl-1-pentene); α-olefin copolymers, such as ethylene-propylene block or random copolymers, α-olefin-propylene block or random copolymers wherein the α-olefin has 4 or more carbon atoms, ethylene-methyl methacrylate copolymers, and ethylene-vinyl acetate copolymers; and cycloolefin polymers such as polycyclohexene and polycyclopentene. Examples of the polyethylene include low-density polyethylene, linear low-density polyethylene, and high-density polyethylene. Examples of the polypropylene include isotactic polypropylene, syndiotactic polypropylene, hemiisotactic polypropylene, and stereoblock polypropylene. With respect to the α-olefin-propylene block or random copolymers wherein the α-olefin has 4 or more carbon atoms, examples of the α-olefin having 4 or more carbon atoms include butene, 3-methyl-1-butene, 3-methyl-1-pentene, and 4-methyl-1-pentene. One of these polyolefin resins may be used alone, or two or more of these may be used in combination.

The polyolefin resin preferably includes polypropylene.

The polypropylene and other polyolefin resins may be used in combination. For example, the polyolefin resin used may be a mixture of polypropylene and any of other α-olefin polymers such as ethylene-propylene block or random copolymers, α-olefin-propylene block or random copolymer wherein the α-olefin has 4 or more carbon atoms.

The polyolefin resin preferably includes polypropylene as a main component. The proportion of polypropylene relative to 100 % by mass of the polyolefin resin is preferably 50 % by mass or more, and more preferably 60 % by mass or more.

The polyolefin resin is particularly preferably polypropylene in terms of flame retardancy.

The melt mass flow rate (MFR) of the thermoplastic resin (A) is preferably 0.1 g/10 min or more, more preferably 0.5 g/10 min or more. On the other hand, this MFR is preferably 80 g/10 min or less, more preferably 60 g/10 min or less. When the MFR of the thermoplastic resin (A) is not less than the lower limit value described above, the moldability improves further. When the MFR is not more than the upper limit value described above, flexural properties, tensile properties, chemical resistance properties, etc. improve further.

The preferable lower and upper limit values described above can be combined as appropriate (the same applies hereinafter).

The MFR of the thermoplastic resin (A) may be, for example, 0.1 g/10 min or more and 80 g/10 min or less, or 0.5 g/10 min or more and 60 g/10 min or less.

The melt mass flow rate of the thermoplastic resin (A) is measured according to JIS K7210 at a temperature of 230 °C under a load of 2.16 kg.

The ratio of the thermoplastic resin (A) to the total mass of the present resin composition is preferably 20 % by mass or more, more preferably 30 % by mass or more, more preferably 40 % by mass or more, more preferably 50 % by mass or more, more preferably 55 % by mass or more, even more preferably 60 % by mass or more. On the other hand, this ratio is preferably 85 % by mass or less, more preferably 83 % by mass or less, even more preferably 80 % by mass or less. When the ratio of the thermoplastic resin (A) is not less than the lower limit value described above, the resin composition tends to show the inherent physical properties of the thermoplastic resin (A). When the ratio is not more than the upper limit value described above, the flame retardancy improves further.

The ratio of the thermoplastic resin (A) to the total mass of the present resin composition may be, for example: 20 % by mass or more and 85% by mass or less; 30 % by mass or more and 85 % by mass or less; 40 % by mass or more and 85 % by mass or less; 50 % by mass or more and 85 % by mass or less; 55 % by mass or more and 83 % by mass or less; or 60 % by mass or more and 80 % by mass or less.

[Phosphorus flame retardant (B)]

The phosphorus flame retardant (B) is a phosphorus compound, that is, a compound containing a phosphorus atom in its molecule.

The phosphorus flame retardant (B) exhibits a flame retardant effect by forming char when the resin composition is burned.

The phosphorus flame retardant (B) may be a known one, such as (poly)phosphates, (poly)phosphate esters, and the like. The term "(poly)phosphate" indicates a phosphate or a polyphosphate. The term "(poly)phosphate" indicates a phosphate or a polyphosphate. The phosphorus-based flame retardant (B) is preferably solid at 80°C.

The phosphorus-containing flame retardant (B) is preferably solid at 80 °C.

As the phosphorus-containing flame retardant (B), a (poly)phosphate is preferable in terms of flame retardancy.

Examples of (poly)phosphates include ammonium polyphosphate, melamine polyphosphate, piperazine polyphosphate, piperazine orthophosphate, melamine pyrophosphate, piperazine pyrophosphate, melamine polyphosphate, melamine orthophosphate, calcium phosphate, and magnesium phosphate. It is likewise possible to use compounds in which melamine or piperazine in the compounds listed above as examples is replaced with other nitrogen compounds. Examples of other nitrogen compounds include N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-diethylethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, trans-2,5-dimethylpiperazine, 1,4-bis(2-aminoethyl)piperazine, 1,4-bis(3-aminopropyl)piperazine, acetoguanamine, benzoguanamine, acrylic guanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, 2-amino-4,6-dimercapto-1,3,5-triazine, ammeline, benzguanamine, acetoguanamine, phthalodiguanamine, melamine cyanurate, melamine pyrophosphate, butylene diguanamine, norbornen diguanamine, methylenediguanamine, ethylene dimelamine, trimethylene dimelamine, tetramethylene dimelamine, hexamethylene dimelamine, and 1,3-hexylene dimelamine. One of these (poly)phosphates may be used alone, or two or more of these may be used in combination.

Among those mentioned above, the phosphorus-containing flame retardant (B) is preferably a salt of (poly)phosphoric acid and a nitrogen compound (hereinafter, also referred to as "compound (B1)"). The term "(poly)phosphoric acid" indicates phosphoric acid or polyphosphoric acid. The compound (B1) is an intumescent flame retardant, and forms a surface expanded layer (intumescent) which is a foamed char when the resin composition is burned. By forming the surface expanded layer, diffusion of decomposition products and heat transfer are suppressed, and excellent flame retardancy is realized.

Examples of nitrogen compounds in the compound (B1) include ammonia, melamine, piperazine, and other nitrogen compounds described above.

Examples of commercially available products usable as the phosphorus-containing flame retardant (B) include Adeka Stab FP-2100J, FP-2200, and FP-2500S (each manufactured by Adeka Corporation).

As described above, the ratio of the phosphorus-containing flame retardant (B) to the thermoplastic resin (A) (100 % by mass) is 5 % by mass or more and 400 % by mass or less. When the ratio of the phosphorus-containing flame retardant (B) to the thermoplastic resin (A) is within the range, the combined use thereof with the copolymer (C) of an α-olefin and a carboxylic anhydride described below not only prevents significant decrease in mechanical properties and flexural modulus, but also enables achievement of high flame retardancy.

With regard to the aforementioned ratio of the phosphorus-containing flame retardant (B) to the thermoplastic resin (A), this ratio is preferably 10 % by mass or more, more preferably 15 % by mass or more, particularly preferably 20 % by mass or more. On the other hand, this ratio is preferably 300 % by mass or less, more preferably 250 % by mass or less, more preferably 200 % by mass or less, more preferably 150 % by mass or less, more preferably 100 % by mass or less, more preferably 80 % by mass or less, even more preferably 50 % by mass or less, particularly preferably 40 % by mass or less.

The ratio of the phosphorus-containing flame retardant (B) to the thermoplastic resin (A) may be, for example: 5 % by mass or more and 300 % by mass or less; 5 % by mass or more and 250 % by mass or less; 5 % by mass or more and 200 % by mass or less; 5 % by mass or more and 150 % by mass or less; 5 % by mass or more and 100 % by mass or less; 10 % by mass or more and 80 % by mass or less; 15 % by mass or more and 50 % by mass or less; or 20 % by mass or more and 40 % by mass or less.

The ratio of the phosphorus-containing flame retardant (B) to the total mass of the resin composition is preferably 15 % by mass or more, more preferably 17 % by mass or more, even more preferably 20 % by mass or more. On the other hand, this ratio is preferably 50 % by mass or less, more preferably 45 % by mass or less, even more preferably 40 % by mass or less. When the ratio of the phosphorus-containing flame retardant (B) is not less than the lower limit value described above, the flame retardancy improves further. When this ratio is not more than the upper limit value described above, the resin composition tends to show the inherent physical properties of the thermoplastic resin (A).

The ratio of the phosphorus-containing flame retardant (B) to the total mass of the present resin composition may be, for example: 15 % by mass or more and 50 % by mass or less; 17 % by mass or more and 45 % by mass or less; or 20 % by mass and 40 % by mass or less.

[Copolymer (C) of α-olefin and unsaturated carboxylic acid]

The copolymer (C) enhances the dispersibility of the phosphorus-containing flame retardant (B) in the thermoplastic resin (A).

In the present invention, the expression "copolymer (C) of an α-olefin and an unsaturated carboxylic acid" means a copolymer in which the ratio of the α-olefin unit to total 100 mol% of the α-olefin unit and the unsaturated carboxylic acid unit is 20 mol% or more and 80 mol % or less.

In the copolymer (C), the ratio of the α-olefin unit to total 100 mol% of the α-olefin unit and the unsaturated carboxylic acid unit is preferably 30 mol% or more and 70 mol% or less. When the ratio of the α-olefin unit is not less than the lower limit value described above, the compatibility with the polyolefin resin improves further. When this ratio is not more than the upper limit value described above, the compatibility with the phosphorus-containing flame retardant (B) improves further.

As the α-olefin in the copolymer (C), an α-olefin having 10 to 80 carbon atoms is preferable. When the number of carbon atoms in the α-olefin is 10 or more, especially, the compatibility with polyolefin resins tends to improve further. When this number is 80 or less, the raw material cost tends to improve further. The number of carbon atoms in the α-olefin is more preferably 12 or more and 70 or less, even more preferably 18 or more and 60 or less.

Examples of the unsaturated carboxylic acid in the copolymer (C) include (meth)acrylic acid, maleic acid, methyl maleate, fumaric acid, methyl fumarate, tetrahydrophthalic acid, itaconic acid, citraconic acid, crotonic acid, isocrotonic acid, glutaconic acid, norbornan-5-ene-2,3-dicarboxylic acid, and esters, anhydrides, imides, etc. of these unsaturated carboxylic acids. The term "(meth)acrylic acid" indicates acrylic acid or methacrylic acid.

Specific examples of the esters, anhydrides or imides of unsaturated carboxylic acids include (meth)acrylic acid esters, such as methyl (meth)acrylate, ethyl (meth)acrylate, butyl (meth)acrylate, 2-ethylhexyl (meth)acrylate, and glycidyl (meth)acrylate; dicarboxylic anhydrides, such as maleic anhydride, itaconic anhydride, citraconic anhydride, and 5-norbornene-2,3-dicarboxylic anhydride; maleimide compounds, such as maleimide, N-ethylmaleimide, and N-phenylmaleimide. One of these may be used alone, or two or more of these may be used in combination.

Among the above examples, esters and dicarboxylic anhydrides are preferred in terms of copolymerization reactivity. Especially, dicarboxylic anhydrides are preferred, and maleic anhydride is particularly preferred, in terms of compatibility with the phosphorus-based flame retardant (B).

The weight average molecular weight of the copolymer (C) is preferably 2,000 or more, more preferably 3,000 or more, and is preferably 50,000 or less, more preferably 30,000 or less. When the weight average molecular weight of the copolymer (C) is within the range set by the upper limit and lower limit values described above, the dispersibility of the phosphorus-containing fire retardant (B) improves further.

The weight average molecular weight of the copolymer (C) may be, for example 2,000 or more and 50,000 or less, or 3,000 or more and 30,000 or less.

The weight average molecular weight of the copolymer (C) is a value obtained by measurement by gel permeation chromatography with respect to a solution of the copolymer (C) in tetrahydrofuran (THF), and calibration with polystyrene standards.

Examples of commercially available products of the copolymer (C) include Licolub CE2 (manufactured by Clariant (Japan) K.K.), and Diacarna 30M (manufactured by Mitsubishi Chemical Corporation).

As described above, while the present resin composition contains the copolymer (C), the mass ratio of the copolymer (C) to the phosphorus-containing flame retardant (B) is 10 % by mass or less.

Particularly, the mass ratio of the copolymer (C) to the phosphorus-containing flame retardant (B) (100 % by mass) is preferably 0.01 % by mass or more, more preferably 0.05 % by mass or more, even more preferably 0.1 % by mass or more, and particularly preferably 0.3 % by mass or more. On the other hand, this mass ratio is preferably 8 % by mass or less, more preferably 6 % by mass or less, and particularly preferably 5 % by mass or less. When the mass ratio of the copolymer (C) to the phosphorus-containing flame retardant (B) (100 % by mass) is within the above range, it is possible to obtain a molded product having high flame retardancy while maintaining high mechanical strength and high flexural modulus.

The mass ratio of the copolymer (C) to the phosphorus-containing flame retardant (B) (100 % by mass) may be, for example: 0.01 % by mass or more and 8 % by mass or less; 0.05 % by mass or more and 8 % by mass or less; 0.1% by mass or more and 6 % by mass or less; or 0.3 % by mass or more and 5 % by mass.

The mass ratio of the copolymer (C) to the total mass of the present resin composition is preferably 0.01 % by mass or more, more preferably 0.03 % by mass or more, and even more preferably 0.1 % by mass or more. On the other hand, this mass ratio is preferably 1.2 % by mass or less, more preferably 1.1 % by mass or less, and even more preferably 1.0 % by mass or less. When the mass ratio of the copolymer (C) is not less than the lower limit value described above, the phosphorus-containing flame retardant (B) is well dispersed, thereby improving the flame retardancy and physical properties of the resin composition, and the appearance of the resulting molded product. When the mass ratio of the copolymer (C) is not more than the upper limit value described above, the adverse influence of the copolymer (C) on the flame retardancy of the resin composition can be suppressed.

The mass ratio of the copolymer (C) to the total mass of the present resin composition may be, for example: 0.01 % by mass or more and 1.2 % by mass or less; 0.03 % by mass or more and 1.1 % by mass or less; or 0.1 % by mass or more and 1.0 % by mass or less.

Further, the mass ratio of the copolymer (C) to the total mass of the thermoplastic resin (A) and the phosphorus-containing flame retardant (B) is preferably 0.01 % by mass or more, more preferably 0.05 % by mass or more, even more preferably 0.1 % by mass or more. On the other hand, this mass ratio is preferably 2.0 % by mass or less, more preferably 1.5 % by mass or less, even more preferably 1.0 % by mass or less. When the mass ratio of the copolymer (C) is not less than the lower limit value described above, the phosphorus-containing flame retardant (B) is well dispersed, thereby further improving the flame retardancy and physical properties of the resin composition, and the appearance of the resulting molded product. When the mass ratio of the copolymer (C) is not more than the upper limit value described above, the adverse influence of the copolymer (C) on the flame retardancy of the resin composition can be further suppressed.

The mass ratio of the copolymer (C) to the total mass of the thermoplastic resin (A) and the phosphorus-containing flame retardant (B) may be, for example: 0.01 % by mass or more and 2.0 % by mass or less; 0.05 % by mass or more and 1.5 % by mass or less; or 0.1 % by mass or more and 1.0 % by mass or less.

The ratio of the total mass of the thermoplastic resin (A), the phosphorus-containing flame retardant (B) and the copolymer (C) to the total mass of the present resin composition is preferably 10 % by mass or more, more preferably 20 % by mass or more, even more preferably 30 % by mass or more, particularly preferably 40 % by mass or more, and may be 100 % by mass.

[Other flame retardants or auxiliary flame retardants]

As other flame retardants or auxiliary flame retardants, halogen-free, organic or inorganic flame retardants or auxiliary flame retardants are preferred. Examples of such flame retardants or auxiliary flame retardants include triazine ring-containing compounds, silicone flame retardants, metal hydroxides, metal oxides, boric acid compounds, expandable graphite, and the like.

Examples of triazine ring-containing compounds include melamine, ammeline, benzguanamine, acetoguanamine, phthalodiguanamine, melamine cyanurate, butylenediguanamine, norbornenediguanamine, methylenediguanamine, ethylenedimelamine, trimethylenedimelamine, tetramethylene dimelamine, hexamethylenedimelamine, and 1,3-hexylene dimelamine.

Examples of silicone flame retardants include silicone oil, silicone rubber, and silicone resin.

Examples of metal hydroxides include magnesium hydroxide, aluminum hydroxide, calcium hydroxide, barium hydroxide, zinc hydroxide, and Kisuma 5A (trademark of magnesium hydroxide, manufactured by Kyowa Chemical Industry Co., Ltd.).

Examples of metal oxides include inorganic compounds, such as zinc oxide, titanium oxide, aluminum oxide, magnesium oxide, titanium dioxide, hydrotalcite, and surface-treated products thereof. Specific examples of metal oxides include TIPAQUE R-680 (trademark of titanium oxide manufactured by Ishihara Sangyo Kaisha, Ltd.), Kyowamag 150 (trademark of magnesium oxide manufactured by Kyowa Chemical Industry Co., Ltd.), DHT-4A (hydrotalcite manufactured by Kyowa Chemical Industry Co., Ltd.), Alcamizer 4 (trademark of zinc-modified hydrotalcite manufactured by Kyowa Chemical Industry Co., Ltd.), and the like.

Examples of boric acid compounds include zinc borate and the like.

With respect to these flame retardants or auxiliary flame retardants, a single type thereof may be used alone or two or more types thereof may be used in combination.

[Other components]

The present resin composition may contain at least one inorganic fiber filler (D) selected from the group consisting of glass fibers and carbon fibers. A single type of inorganic fiber filler (D) may be used alone, or two or more types thereof may be used in combination.

The type of glass fibers is not particularly limited, and any glass fibers, such as E glass, C glass, S glass, and D glass, may be used.

The form of the glass fibers is also not particularly limited, and any glass fibers, such as chopped strands, roving, yarn, and glass wool, may be used, but chopped strands and glass wool are preferable in terms of workability.

The type of carbon fibers is not particularly limited, and any carbon fibers, such as polyacrylonitrile (PAN)-based carbon fibers, pitch-based carbon fibers, and graphite fibers, may be used.

The form of the carbon fibers is also not particularly limited, and any carbon fibers, such as filaments, regular tows, large tows, stable yarns, and chopped strands, may be used, but chopped strands are preferable in terms of workability.

When the present resin composition contains the inorganic fiber filler (D), the ratio of the inorganic fiber filler (D) to the total mass of the present resin composition is preferably 0.01 % by mass or more, more preferably 0.1 % by mass or more. On the other hand, this ratio is preferably 50 % by mass or less, more preferably 40 % by mass or less, more preferably 30 % by mass or less, more preferably 25 % by mass or less, more preferably 10 % by mass or less, even more preferably 5 % by mass or less, particularly preferably 3 % by mass or less. When the ratio of the inorganic fiber filler (D) is not less than the lower limit value described above, the lip prevention effect and the smoking suppression effect are likely to be obtained. When this ratio is not more than the upper limit value described above, the inherent physical properties of the thermoplastic resin (A) are less likely to be impaired.

When the present resin composition contains the inorganic fiber filler (D), the present resin composition may further contain an interface strength enhancer (E) for the inorganic fiber filler (D).

As the interface strength enhancer (E), polymers having an olefin skeleton (excluding polyolefin resins and the copolymer (C)) are preferable, particularly in terms of compatibility with the thermoplastic resin (A), such as polyolefin resins). The Interface strength is allowed to improve further improved when the olefin skeleton is compatibilized with the polyolefin resin.

The interface strength enhancer (E) preferably has an acidic group. The interface strength is further improved by the reaction between the inorganic fiber filler (D) and the acidic group.

Examples of the acidic group include a carboxyl group, a carboxylic anhydride group, a sulfonic acid group, a sulfinic acid group, a phosphonic acid group, a phosphinic acid group, and the like. The acidic group is preferably at least one selected from the group consisting of a carboxyl group, a carboxylic anhydride group, a sulfonic acid group, a sulfinic acid group, a phosphonic acid group and a phosphinic acid group, more preferably at least one selected from the group consisting of a carboxyl group, a carboxylic anhydride group and a phosphonic acid group, particularly preferably at least one selected from the group consisting of a carboxyl group and a carboxylic acid anhydride group.

Examples of the method for producing the interface strength enhancer (E) having an olefin skeleton and an acidic group include (1) a method in which an olefin resin is thermally decomposed at a high temperature to reduce its molecular weight, and then a compound or monomer having an acidic group is added, (2) a method in which a lowmolecular-weight olefin resin is polymerized, and then a compound or monomer having an acidic group is added, and (3) a method in which an $\alpha$-olefin and a compound or monomer having an acidic group are copolymerized. As the polymerization method, a radical polymerization method (such as solution polymerization, emulsion polymerization, suspension polymerization, or bulk polymerization) or a living polymerization method can be employed. Further, it is also possible to employ a method in which a macromonomer is first formed, and then the obtained macromonomer is polymerized.

Examples of compounds or monomers having an acidic group include acrylic acid, methacrylic acid, maleic acid, fumaric acid, maleic anhydride, and citraconic anhydride, among which maleic anhydride is particularly preferred.

Examples of commercially available products of the interface strength enhancer (E) include Yumex 1001 and 1010 (manufactured by Sanyo Chemical Industries, Ltd.) and Kayabrid 002PP and 003PP (manufactured by Kayaku Nouryon Corporation).

The present resin composition may contain at least one selected from the group consisting of antioxidants, ultraviolet absorbers, light stabilizers and antioxidants.

Examples of antioxidants include phenolic antioxidants, phosphoric antioxidants, and thioether antioxidants.

Examples of phenolic antioxidants include 2,6-di-tert-butyl-p-cresol, 2,6-diphenyl-4-octadecyloxyphenol, distearyl (3,5-di-tert-butyl-4-hydroxybenzyl) phosphonate, 1,6-hexamethylenebis[(3,5-di-tert-butyl-4-hydroxyphenyl)propionamide], 4,4'-thiobis(6-tert-butyl-m-cresol), 2,2'-methylenebis(4-methyl-6-tert-butylphenol), 2,2'-methylenebis(4-ethyl-6-tert-butylphenol), 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl (3,5-di-tert-butyl-4-hydroxyphenyl) propionate, tetrakis[3-(3,5-di-tert-butyl-4-hydroxyphenyl)methylpropionate]methane, thiodiethylene glycol bis[(3,5-di-tert-butyl-4-hydroxyphenyl)propionate], 1,6-hexamethylenebis[(3,5-di-tert-butyl-4-hydroxyphenyl)propionate], bis[3,3-bis(4-hydroxy-3-tert-butylphenyl)butyric acid]glycol ester, bis[2-tert-butyl-4-methyl-6-(2-hydroxy-3-tert-butyl-5-methylbenzyl)phenyl]terephthalate, 1,3,5-tris[(3,5-di-tert-butyl-4-hydroxyphenyl)propionyloxyethyl]isocyanurate, 3,9-bis[1,1-dimethyl-2-{(3-tert-butyl-4-hydroxy-5-methylphenyl)propionyloxy}ethyl]-2,4,8,10-tetraoxaspiro[5,5] undecane, triethylene glycol bis [(3-tert-butyl-4-hydroxy-5-methylphenyl) propionate] and the like.

The amount of the phenolic antioxidant is preferably 0.001 part by mass or more, more preferably 0.05 parts by mass or more, with respect to 100 parts by mass of the synthetic resin component in the resin composition. On the other hand, this amount is preferably 10 parts by mass or less, more preferably 5 parts by mass or less.

Examples of phosphoric antioxidants include trisnonylphenyl phosphite, tris[2-tert-butyl-4-(3-tert-butyl-4-hydroxy-5-methylphenylthio)-5-methylphenyl]phosphite, tridecyl phosphite, octyldiphenyl phosphite, di(decyl) monophenyl phosphite, di(tridecyl) pentaerythritol diphosphite, di(nonylphenyl) pentaerythritol diphosphite, bis(2,4-di-tert-butylphenyl) pentaerythritol diphosphite, bis(2,6-di-tert-butyl-4-methylphenyl) pentaerythritol diphosphite, bis(2,4,6-tri- tributylphenyl)pentaerythritol diphosphite, bis(2,4-dicumylphenyl)pentaerythritol diphosphite, tetra(tridecyl)isopropylidene diphenol diphosphite, tetra(tridecyl)-4,4'-n-butylidenebis(2-tert-butyl-5- methylphenol) diphosphite, hexa(tridecyl)-1,1,3-tris(2-methyl-4-hydroxy-5-tert-butylphenyl)butane triphosphite, tetrakis(2,4-ditert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexylphosphite, 2,2'-methylenebis(4,6-tert-butylphenyl)-octadecylphosphite, 2,2'-ethylidenebis(4,6-di-tert-butylphenyl)fluorophosphite, tris(2-[(2,4,8,10-tetrakis-tert-butyldibenzo[d,f][1,3,2] dioxaphosphepin-6-yl)oxy]ethyl)amine, phosphite of 2-ethyl-2-butylpropylene glycol and 2,4,6-tri-tert-butylphenol, and tris(2,4-di-tert-butylphenyl) phosphite.

The amount of the phosphoric antioxidant is preferably 0.001 part by mass or more, more preferably 0.05 parts by mass or more, with respect to 100 parts by mass of the synthetic resin component in the resin composition. On the other hand, this amount is preferably 10 parts by mass or less, more preferably 5 parts by mass or less.

Examples of thioether antioxidants include dialkyl thiodipropionates, such as dilauryl thiodipropionate, dimyristyl thiodipropionate, and distearyl thiodipropionate; and pentaerythritol tetra(β-alkylthiopropionate).

The amount of the thioether antioxidant is preferably 0.001 part by mass or more, more preferably 0.05 parts by mass or more, with respect to 100 parts by mass of the synthetic resin component in the resin composition. On the other hand, this amount is preferably 10 parts by mass or less, more preferably 5 parts by mass or less.

Examples of ultraviolet absorbers include 2-hydroxybenzophenones, such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2'-hydroxyphenyl)benzotriazoles, such as 2-(2'-hydroxy-5'-methylphenyl)benzotriazole, 2-(2'-hydroxy-3',5'-ditert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3 ',5'-Dicumylphenyl)benzotriazole, 2,2'-methylenebis(4-tert-octyl-6-(benzotriazolyl)phenol), and 2-(2'-hydroxy-3'-tert-butyl -5'-carboxyphenyl)benzotriazole; benzoates, such as phenyl salicylate, resorcinol monobenzoate, 2,4-di-tert-butylphenyl-3,5-di-tert-butyl-4-hydroxybenzoate, 2,4-di-tert-amylphenyl-3,5-di-tert-butyl- 4-hydroxybenzoate, and hexadecyl-3,5-di-tert-butyl-4-hydroxybenzoate; substituted oxanilides, such as 2-ethyl-2'-ethoxyoxanilide, and 2-ethoxy-4'-dodecyloxanilide; cyanoacrylates, such as ethyl-α-cyano-β,β-diphenyl acrylate, and methyl-2-cyano-3-methyl-3-(p-methoxyphenyl) acrylate; triaryltriazines, such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-tert-butylphenyl)-s-triazine.

The amount of the ultraviolet absorber is preferably 0.001 part by mass or more, more preferably 0.05 parts by mass or more, with respect to 100 parts by mass of the synthetic resin component in the resin composition. On the other hand, this amount is preferably 30 parts by mass or less, more preferably 10 parts by mass or less.

Examples of light stabilizers include hindered amine compounds, such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-tetramethyl-4-piperidyl) sebacate, bis(1-octoxy-2,2,6,6-tetramethyl-4-piperidyl) sebacate, tetrakis(2,2,6,6-tetramethyl-4-piperidyl)-1,2,3,4-butanetetra carboxylate, tetrakis(1,2,2,6,6-pentamethyl-4-piperidyl)-1,2,3,4-butanetetracarboxylate, bis(2,2,6,6-tetramethyl-4- piperidyl)·di(tridecyl)-1,2,3,4-butanetetracarboxylate, bis(1,2,2,6,6-pentamethyl-4-piperidyl)·di(tridecyl)-1,2,3,4-butane tetracarboxylate, bis(1,2,2,4,4-pentamethyl-4-piperidyl)-2-butyl-2-(3,5-di-tert-butyl-4-hydroxybenzyl)malonate, 1-(2-hydroxyethyl) -2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin-6-yl]-1,5,8-12-tetraazadodecane, 1,6,11-tris[2,4-bis(N-butyl-N-(2,2,6,6-tetramethyl-4-piperidyl)amino)-s-triazin-6-yl]aminoundecane, and 1,6,11-tris[2,4-bis(N-butyl-N-(1,2,2,6,6-pentamethyl-4-piperidyl)amino)-s-triazin-6-yl]aminoundecane.

The amount of the light stabilizer is preferably 0.001 part by mass or more, more preferably 0.05 parts by mass or more, with respect to 100 parts by mass of the synthetic resin component in the resin composition. On the other hand, this amount is preferably 30 parts by mass or less, more preferably 10 parts by mass or less.

The present resin composition may contain other fillers than the inorganic fiber filler (D).

As other fillers, fibrous, platy, granular and powdery fillers can be used. Specific examples thereof include inorganic fibrous reinforcing materials, such as asbestos fibers, metal fibers, potassium titanate whiskers, aluminum borate whiskers, magnesium whiskers, silicon whiskers, wollastonite, sepiolite, asbestos, slag fibers, xonolite, ellestadite, gypsum fibers, silica fibers, silica/alumina fibers, zirconia fibers, boron nitride fibers, silicon nitride fibers, and boron fiber; organic fibrous reinforcing materials, such as polyester fibers, nylon fibers, acrylic fibers, regenerated cellulose fibers, acetate fibers, kenaf, ramie, cotton, jute, hemp, sisal, flax, linen, silk, Manila hemp, sugar cane, wood pulp, waste paper, used paper, and wool; reinforcing material in platy or granular form, such as glass flakes, nonswelling mica, graphite, metal foil, ceramic beads, clay, mica, sericite, zeolite, bentonite, dolomite, kaolin, fine silicic acid, feldspar powders, potassium titanate, shirasu balloons, calcium carbonate, magnesium carbonate, barium sulfate, calcium oxide, aluminum oxide, titanium oxide, titanium dioxide, aluminum silicate, gypsum, novaculite, dawsonite, and white clay. These fillers may be coated or bundled with a thermoplastic resin such as ethylene-vinyl acetate copolymer or a thermosetting resin such as epoxy resin, or treated with a coupling agent such as aminosilane or epoxysilane.

The amount of the other fillers is preferably 10 parts by mass or more, more preferably 20 parts by mass or more, with respect to 100 parts by mass of the synthetic resin component in the resin composition. On the other hand, this amount is preferably 60 parts by mass or less, more preferably 50 parts by mass or less.

The present resin composition may contain a crystal nucleating agent.

As the crystal nucleating agent, those generally used as crystal nucleating agents for polyolefin resins can be used as appropriate, and examples thereof include inorganic crystal nucleating agents and organic crystal nucleating agents.

Specific examples of inorganic crystal nucleating agents include kaolinite, synthetic mica, clay, zeolite, graphite, carbon black, magnesium oxide, titanium oxide, calcium sulfide, boron nitride, calcium carbonate, barium sulfate, aluminum oxide, neodymium oxide, and metal salts such as phenylphosphonate. These inorganic crystal nucleating agents may be modified with an organic substance in order to enhance their dispersibility in the composition.

Specific examples of organic crystal nucleating agents include: organic carboxylic acid metal salts, such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, myristic acid sodium, potassium myristate, calcium myristate, sodium octacosanoate, calcium octacosanoate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β-naphthalate, and sodium cyclohexanecarboxylate; organic sulfonates, such as sodium p-toluenesulfonate, and sodium sulfoisophthalate; carboxylic acid amides, such as stearic acid amide, ethylenebislauric acid amide, palmitic acid amide, hydroxystearic acid amide, erucic acid amide, trimesic acid tris(t-butylamide); benzylidene sorbitol and its derivatives; phosphorus compound metal salts, such as sodium-2,2'-methylenebis(4,6-dit-butylphenyl)phosphate; and 2,2-methylbis(4,6-di-t-butylphenyl)sodium.

The present resin composition may contain a plasticizer.

As the plasticizer, those generally used as plasticizers for polyolefin resins can be used as appropriate, and examples thereof include polyester plasticizers, glycerin plasticizers, polyvalent carboxylic acid ester plasticizers, polyalkylene glycol plasticizers, and epoxy plasticizers.

One of these plasticizers may be used alone, or two or more of these may be used in combination.

Specific examples of polyester plasticizers include polyesters each composed of an acid component such as adipic acid, sebacic acid, terephthalic acid, isophthalic acid, naphthalenedicarboxylic acid, diphenyldicarboxylic acid and rosin, and a diol component such as propylene glycol, 1,3-butanediol, 1,4-butanediol, 1,6-hexanediol, ethylene glycol and diethylene glycol; and polyesters composed of hydroxycarboxylic acids, such as polycaprolactone. These polyesters may be terminal-blocked with a monofunctional carboxylic acid or monofunctional alcohol, or may be terminal-blocked with an epoxy compound or the like.

Specific examples of glycerin plasticizers include glycerin monoacetomonolaurate, glycerin diacetomonolaurate, glycerin monoacetomonostearate, glycerin diacetomonooleate and glycerin monoacetomonomontanate.

Specific examples of polyvalent carboxylic acid ester plasticizers include phthalates, such as dimethyl phthalate, diethyl phthalate, dibutyl phthalate, dioctyl phthalate, diheptyl phthalate, dibenzyl phthalate, and butyl benzyl phthalate; trimellitates, such as tributyl trimellitate, trioctyl trimellitate, and trihexyl trimellitate; adipates, such as diisodecyl adipate, n-octyl-n-decyl adipate, methyldiglycolbutyldiglycol adipate, benzylmethyldiglycol adipate, and benzylbutyldiglycol adipate; citrates, such as acetyl triethyl citrate, and acetyl tributyl citrate; azelates, such as di-2-ethylhexyl azelate; and sebacates, such as dibutyl sebacate, and di-2-ethylhexyl sebacate.

Specific examples of polyalkylene glycol plasticizers include polyalkylene glycols, such as polyethylene glycol, polypropylene glycol, poly(ethylene oxide/propylene oxide) block and/or random copolymers, polytetramethylene glycol, ethylene oxide addition polymers of bisphenols, propylene oxide addition polymers of bisphenols, tetrahydrofuran addition polymers of bisphenols, and terminal-blocked compounds thereof, such as terminal epoxy-modified compounds, terminal ester-modified compounds, and terminal ether-modified compounds.

The term "epoxy plasticizer" generally refers to epoxy triglycerides composed of an alkyl epoxy stearate and soybean oil; however, it is also possible use what are generally referred to as "epoxy resins", which are produced mainly from bisphenol A and epichlorohydrin as raw materials.

Specific examples of other plasticizers include benzoic acid esters of aliphatic polyols, such as neopentyl glycol dibenzoate, diethylene glycol dibenzoate, and triethylene glycol di-2-ethylbutyrate; fatty acid amides, such as stearamide; aliphatic carboxylic acid esters, such as butyl oleate; oxy acid esters, such as methyl acetylricinoleate, and butyl acetylricinoleate; pentaerythritol; various sorbitols; polyacrylates; and paraffins.

The present resin composition may contain a fluorine-containing anti-dripping agent.

Examples of fluorine-containing anti-dripping agents include fluorine-containing polymers having fibril-forming ability. Examples of such fluorine-containing polymers include polytetrafluoroethylene (hereinafter, also referred to as "PTFE"), tetrafluoroethylene copolymers (e.g., tetrafluoroethylene/hexafluoropropylene copolymer), partially fluorinated polymers as disclosed by U.S. Patent No. 4,379,910, and polycarbonate resins produced from a fluorinated diphenol. Among them, PTFE is preferred.

PTFE having fibril-forming ability has an extremely high molecular weight, and shows a tendency to bind PTFE molecules together into fibers by an external action such as a shearing force. The molecular weight thereof is preferably 1,000,000 or more, more preferably 2,000,000 or more, in terms of number average molecular weight determined from standard specific gravity. On the other hand, the molecular weight is preferably 10,000,000 or less, more preferably 9,000,000 or less.

The PTFE having fibril-forming ability can be used not only in a solid form, but also in an aqueous dispersion form.

Examples of commercial products of the PTFE having fibril-forming ability include Teflon (registered trademark) 6J, manufactured by Mitsui-DuPont Fluorochemicals Co., Ltd., and Polyflon (registered trademark) MPA FA500 and F-201L, manufactured by Daikin Industries, Ltd. Examples of commercially available products of the PTFE aqueous dispersions include Fluon AD-939E, manufactured by Asahi ICI Fluoropolymers Co., Ltd., Fluon D-310 and D-210C, manufactured by Daikin Industries, Ltd., and Teflon 31JR, manufactured by Mitsui-DuPont Fluorochemicals Co., Ltd.

In order to improve the dispersibility of PTFE having fibril-forming ability in the resin composition to achieve further improved flame retardancy, mechanical properties and flexural modulus, it is also possible to use a PTFE mixture which is a mixture of PTFE having fibril-forming ability and other resins.

The proportion of PTFE to the total mass of the PTFE mixture is preferably 1 % by mass or more, more preferably 5 % by mass or more. On the other hand, this ratio is preferably 60 % by mass or less, more preferably 55 % by mass or less. Excellent dispersibility of PTFE can be achieved when the proportion of PTFE is in this range.

As the PTFE mixture, for example, it is possible to use one prepared by (1) a method in which an aqueous dispersion of PTFE is mixed with an aqueous dispersion or solution of another resin to co-precipitate the resins, thereby obtaining a co-aggregated mixture (method described in Japanese Unexamined Patent Application Publication No. Sho 60-258263, Japanese Unexamined Patent Application Publication No. Sho 63-154744, etc.), (2) a method in which an aqueous dispersion of PTFE is mixed with dried particles of another resin (method described in Japanese Unexamined Patent Application Publication No. Hei 4-272957), (3) a method in which an aqueous dispersion of PTFE and a solution of another resin are uniformly mixed, and the respective media are simultaneously removed from the mixture (method described in Japanese Unexamined Patent Application Publication No. Hei 06-220210, Japanese Unexamined Patent Application Publication No. Hei 08-188653, etc.), (4) a method in which monomers forming another resin are polymerized in an aqueous dispersion of PTFE (method described in Japanese Unexamined Patent Application Publication No. Hei 9-95583), or (5) a method in which an aqueous dispersion of PTFE and a dispersion of another resin are uniformly mixed, and vinyl monomers are polymerized in the resulting mixed dispersion, followed by recovering a mixture (method described in Japanese Unexamined Patent Application Publication No. Hei 11-29679, etc.).

Examples of commercially available products of the PTFE mixture include "Metablen A3000", manufactured by Mitsubishi Chemical Corporation, and "Blendex B449", manufactured by GE Specialty Chemicals.

The amount of the fluorine-containing anti-dripping agent is preferably 0.01 parts by mass or more, more preferably 0.05 parts by mass or more, and even more preferably 0.1 parts by mass or more in terms of an amount of PTFE per 100 parts by mass of the present resin composition. On the other hand, this amount is preferably 1 part by mass or less, more preferably 0.8 parts by mass or less, and even more preferably 0.5 parts by mass or less.

In addition to the above, the present resin composition may contain additives generally used in synthetic resins, such as cross-linking agents, antistatic agents, metallic soaps, filling agents, anti-fogging agents, anti-plate-out agents, surface treatment agents, fluorescent agents, antifungal agents, bactericidal agents, foaming agents, metal deactivators, mold release agents, pigments, processing aids, etc., as far as the effects of the present invention are not impaired.

[Method for producing resin composition]

Any method may be employed as appropriate to produce the present resin composition. For example, it is possible to employ a method in which the thermoplastic resin (A), the phosphorus-containing flame retardant (B), the copolymer (C), and optionally other flame retardants, auxiliary flame retardants, or other components are sufficiently mixed using a premixing means such as a V-type blender, a Henschel mixer, a mechanochemical equipment or an extrusion mixer, and optionally after granulating with an extrusion granulator or a briquetting machine, the resulting is melt-kneaded with a meltkneader and extruded.

Examples of melt-kneaders includes a twin-screw extruder such as a vented twin-screw extruder, a Banbury mixer, a kneading roll, a single-screw extruder, and a multiscrew extruder with three or more screws.

The temperature during melt-kneading is, for example, 170 to 260 °C.

The resin composition extruded as described above is directly cut and pelletized by a device such as a pelletizer, or is cooled to form strands, which are then cut and pelletized by a device such as a pelletizer.

Since the present resin composition described above contains the copolymer (C) in combination with the thermoplastic resin (A) and the phosphorus-containing flame retardant (B), the present resin composition is enabled to show excellent flame retardancy while sufficiently maintaining the inherent physical properties of the polyolefin resin (A) (for example, mechanical strength and high flexural modulus).

The copolymer (C) improves the dispersibility of the phosphorus-containing flame retardant (B) in the thermoplastic resin (A) such as polyolefin resins. It is presumed that the improved dispersibility of the phosphorus-containing flame retardant (B) facilitates the formation of char during burning and improves the flame retardancy. The mechanism underlying this effect is not clear, but is presumably as follows.

Especially when the thermoplastic resin (A) is a polyolefin resin, the polyolefin resin is classified as a low polarity resin among thermoplastic resins, and it is difficult to disperse polar additives such as a phosphorus-containing flame retardant (B) in the polyolefin resin. On the other hand, the copolymer (C) has a low polarity $\alpha$-olefin moiety having excellent compatibility with the polyolefin resin, as well as a polar unsaturated carboxylic acid moiety having excellent compatibility with the phosphorus-containing flame retardant (B). It is presumed that the presence of the copolymer (C) between the polyolefin resin and the phosphorus-containing flame retardant (B) while the resin composition is being melt-kneaded improves the dispersibility of the phosphorus-containing flame retardant (B) in the polyolefin resin.

The effects of the copolymer (C) include, for example, (1) improvement of dispersibility of the phosphorus-containing flame retardant (B) (fine dispersion), (2) promotion of char formation during burning, and (3) improvement of physical properties (tensile strain at break).

Specifically, regarding the effect shown at the time of burning, when a flat test piece obtained by molding a resin composition containing the thermoplastic resin (A) and the phosphorus-containing flame retardant (B) is burned with a burner, the absence of the copolymer (C) in the resin composition results in a small amount of char formation on the surface, while the presence of the copolymer (C) in the resin composition increases the size of the char to thereby improve the heat transfer suppression effect. Further, in a cone calorimeter test, when a 3 mm-thick flat plate obtained by molding a resin composition containing the thermoplastic resin (A) and the phosphorus-containing flame retardant (B) is burned by radiant heat, the absence of the copolymer (C) in the resin composition results in many gaps between charred areas to allow the molded product to be burned, while the presence of the copolymer (C) in the resin composition decreases the gaps between charred areas and allows char formation to occur by burning on side surfaces so as to form a dome of char.

The mechanism underlying this effect is not clear, but the addition of the copolymer (C) enables formation of stronger char to suppress heat transfer, and achievement of V-0 in the UL94 test.

The copolymer (C) can exhibit the above effect even when present in a small amount (for example, 1.2 % by mass or less with respect to the total mass of the resin composition).

In the present resin composition, since the phosphorus-containing flame retardant (B) is well dispersed, it is possible to obtain a molded product having a dispersibility of, for example, 22 % or less, or even 21 % or less, in terms of a value calculated by the following equation.

$$\text{Dispersibility } [\%] = \text{Sum of area values for particles with a size of } 4{,}000 \ \mu\text{m}^2 \text{ or more } [\mu\text{m}^2] \div \text{flame retardant area (threshold 3\%, 136,331) } [\mu\text{m}^2] \times 100$$

In this equation, the sum of area values for the particles having a size of 4,000 $\mu$m2 or more and the flame retardant area are determined by image-processing an optical microscope image of the molded product. The details are as described in the Examples section described later.

(Molded Product)

A molded product according to one aspect of the present invention includes the present resin composition.

The shape of the molded product is not particularly limited, and the molded product may be of any of various shapes, such as a resin plate, sheet, film, cable, irregularshaped product, and the like.

The molded product is obtained by molding the present resin composition.

The molding method is not particularly limited, and examples thereof includes extrusion, calendering, injection molding, roll molding, compression molding, blow molding and the like.

The temperature for molding the present resin composition is, for example, 170 to 260 °C.

[Examples]

Hereinbelow, the present invention is specifically described by way of Examples. However, the present invention is in no way limited by these Examples. In the following Examples, etc., the values with "%" are based on mass unless otherwise specified.

Evaluations were implemented on the following items.

(1) Flame retardancy (UL94)

Using the obtained molded product (1/16 inch test bar), the flame retardancy was determined according to the UL94 standard.

(2) Flame retardant dispersibility evaluation 1

The number of undispersed fractions of the flame retardant present in the obtained molded product (0.5 mm-thick sheet) was evaluated. Specific evaluation procedure was as follows. The sheet was observed using an optical microscope (product name: ECLIPSE E600W POL, manufactured by Nikon Corporation) with transmitted light and at a magnification of 50 (eyepiece magnification $10\times$, objective magnification 5x). From the resulting optical microscope image, using image processing software (Image J, Ver. 1.52a), 5 images of $640\times480$ pixels were randomly selected and captured, and converted to 8-bit format. In the observation at a magnification of 50, 1,000 $\mu$m is 260 pixels, so that $640 \times 480$ pixels amounts to 4,454,379 $\mu m^2$. Then, the flame retardant in the sheet was enhanced by Bandpass filter treatment, and the concentration thereof was measured. Since the flame retardant has the deepest contrast in the image, the threshold was set to a portion where the binarized area value from the minimum value (0) reaches 3 %, and the area of the flame retardant was extracted. Subsequently, among the particles in the binarized image, the areas of particles having a size of 4,000 $\mu m^2$ or more were added up, and the dispersibility [%] was calculated by the following formula to determine the average value of the dispersibility for the 5 images.

$$\text{Dispersibility [\%]} = \text{Sum of area values for particles with a size of } 4{,}000 \ \mu m^2 \text{ or}$$

$$\text{more } [\mu m^2] \div \text{flame retardant area (threshold 3\%, 136,331) } [\mu m^2] \times 100$$

(3) Flame retardant dispersibility evaluation 2

Images obtained by the same observation procedure as in the above "(2) Flame retardant dispersibility evaluation 1" were compared in terms of dispersibility according to the following criteria.

> A: 100 or more flame retardant particles are observed in the photograph.
> B: The number of flame retardant particles in the photograph is 50 or more and less than 100.
> C: The number of flame retardant particles in the photograph is less than 50.
> D: The number of flame retardant particles in the photograph is less than 30.

In this evaluation, the grades "A" to "D" are listed in order from the lowest level to the highest level in terms of dispersibility.

(4) Flexural properties

The obtained molded product (dumbbell specimen conforming to JIS K7139-A1) was cut into a length of 80 mm, and the flexural modulus (GPa) was measured according to JIS K7171.

(5) Tensile properties

Using the obtained molded product (dumbbell specimen conforming to JIS K7139-A1), the tensile strength at yield (MPa) and tensile strain at break (%) were measured according to JIS K7161-1.

(6) Combustion heat release (cone calorimeter)

For a test piece of 100 mm $\times$ 100 mm $\times$ thickness 3 mm, using model: C3 cone calorimeter III, manufactured by Toyo Seiki Co., Ltd., the maximum heat release rate (kW/m$^2$) and the total heat release (MJ/m$^2$) were measured at a radiant heat of 50 kW/m$^2$ in accordance with ISO5660-1 (2002) .

The raw materials used were as follows.

<Polyolefin resin>

A-1: Polypropylene resin (Novatec PP FY-4, manufactured by Japan Polypropylene Corporation, melt mass flow rate 5 g/10 min)
A-2: Polypropylene resin (Novatec PP SA06GA, manufactured by Japan Polypropylene Corporation, melt mass flow rate 60 g/10 min)

<Flame Retardant>

B: Phosphorus-containing flame retardant composition (Adekastab FP-2200, manufactured by ADEKA Corporation, piverazine pyrophosphate content 50 to 60 %, melamine pyrophosphate content 35 to 45 %, and zinc oxide content 3 to 6 %, based on the total mass of the phosphorus-containing flame retardant composition).

<Dispersant>

C-1: α-olefin/maleic anhydride copolymer (Diacarna 30M,manufactured by Mitsubishi Chemical Corporation, weight average molecular weight 7,800)
C-2: α-olefin/maleic anhydride copolymer (Licolub CE2, manufactured by Clariant (Japan) K.K., weight average molecular weight 13,500)
C-3: Maleic anhydride-modified polyethylene (Hi-Wax 1105A, manufactured by Mitsui Chemicals Inc.)
C-4: Acid-modified polyethylene (Licolub H12, manufactured by Clariant (Japan) K.K.)

[Examples 1 to7 and Comparative Examples 1 to 4]

The raw materials shown in Table 1 were blended at the ratio shown in Table 1 and mixed by hand blending. The resulting was melt-kneaded using a φ30 mm co-rotating twin-screw extruder (model name "BT-30", manufactured by Research Laboratory of Plastics Technology Co., Ltd., LID = 30) at a screw rotation speed of 250 rpm and a cylinder temperature of 200 °C to obtain a resin composition. In this context, "L/D" indicates the ratio of screw length (L) to screw diameter (D).

The obtained resin composition was injection molded using a 100t injection molding machine (model name "SE-100DU", manufactured by Sumitomo Heavy Industries, Ltd.) at a molding temperature of 200 °C to obtain a molded product (1/16 inch test bar). This molded product (1/16 inch test bar) was used as a test piece for UL94 evaluation.

Further, the obtained resin composition was injection molded using a 100t injection molding machine (model name "SE-100DU", manufactured by Sumitomo Heavy Industries, Ltd.) at a molding temperature of 200 °C to obtain a molded product (dumbbell specimen conforming to JIS K7139-A1). This molded product (dumbbell test piece conforming to JIS K7139-A1) was used as a test piece for evaluating flexural properties and tensile properties.

The obtained resin composition was injection molded using a 100t injection molding machine (model name "SE-100DU", manufactured by Sumitomo Heavy Industries, Ltd.) at a molding temperature of 200 °C to obtain a molded product (100 × 100 × 3 mm square plate). The obtained molded product (100 × 100 × 3 mm square plate) was pressed using a hydraulic molding machine (manufactured by Shoji Iron Works Co., Ltd.) at a molding temperature of 200 °C and a molding pressure of 10 MPa while implementing 5-minute preheating, 5-minute pressurization and 5-minute cooling in this sequence to obtain a molded product (sheet) having a thickness of 0.5 mm. The obtained molded product (sheet) was used as a test piece for evaluating the dispersibility of the flame retardant.

These molded products were tested for various properties. The results are shown in Table 1. With regard to the dispersibility, dispersibility evaluation 1 was implemented for Examples 1 to 7 and Comparative Examples 1 to 3, and dispersibility evaluation 2 was implemented for Example 4 and Comparative Examples 1 and 4.

In addition, with respect to the values of dispersibility (value obtained in dispersibility evaluation 1), flexural modulus and tensile strain at break in the examples and comparative examples, the ratios (%) thereof to the corresponding values in Comparative Example 1 were calculated. These values are shown in Table 1 as dispersibility ratio, flexural modulus ratio, and tensile strain at break.

[Example 8]

39.18 % by mass of A-2: Novatec PP SA06GA as the polypropylene resin, 58.78 % by mass of B: Adekastab FP-2200 as the phosphorus-containing flame retardant composition, 1.96 % by mass of C-1: Diacarna 30M as the dispersant, and 0.04 % by mass each of Adekastab AO-60 and Adekastab 2112 as the antioxidant were melt-kneaded using a cp30mm co-rotating twin-screw extruder (model name "BT-30", manufactured by Research Laboratory of Plastics Technology Co., Ltd., L/D=30) at a screw rotation speed of 250 rpm and a cylinder temperature of 200 °C to prepare a flame retardant masterbatch-1. 50 % by mass of the obtained masterbatch-1 and 50 % by mass of the polypropylene resin A-1 (Novatec PP FY4) were mixed, and injectionmolded using a 100t injection molding machine (model name "SE-100DU", manufactured by Sumitomo Heavy Industries, Ltd.) at a molding temperature of 200 °C. The same evaluations as in Example 1 were implemented. The results are shown in Table 1.

[Example 9]

A masterbatch-2 was obtained in the same manner as in Example 8, except that composition was changes as follows: 29.31 % by mass of A-2: Novatec PP SA06GA as the polypropylene resin, 68.39 % by mass of B: Adekastab FP-2200 as the phosphorus-containing flame retardant composition, 2.25 % by mass of C: Diacarna 30M as the dispersant, and 0.03 % by mass each of Adekastab AO-60 and Adekastab 2112 as the antioxidant. 47 % by mass of the obtained Masterbatch-2 and 53 % by mass of the polypropylene resin A-1 Novatec PP FY4 were mixed, and the resulting mixture was injection molded under the same conditions as in Example 8, and the same evaluations as in Example 1 were performed. The results are shown in Table 1.

[Table 1]

| | | | Example | | | | | | | | | Comparative Example | | | |
|---|---|---|---|---|---|---|---|---|---|---|---|---|---|---|---|
| | | | 1 | 2 | 3 | 4 | 5 | 6 | 7 | 8 | 9 | 1 | 2 | 3 | 4 |
| Resin composition | A-1 | % | 73.9 | 73.7 | 73.5 | 73 | 73.5 | 68.5 | 58 | 50 | 53 | 74 | 73.5 | 73.5 | 70.1 |
| | A-2 | % | - | - | - | - | - | - | - | 20 | 14 | - | - | - | - |
| | B | % | 26 | 26 | 26 | 26 | 26 | 30 | 40 | 29 | 32 | 26 | 26 | 26 | 26 |
| | C-1 | % | 0.1 | 0.3 | 0.5 | 1 | - | 1.5 | 2 | 1 | 1 | - | - | - | 3.9 |
| | C-2 | % | - | - | - | - | 0.5 | - | - | - | - | - | 0.5 | - | - |
| | C-3 | % | - | - | - | - | - | - | - | - | - | - | - | 0.5 | - |
| | C-4 | % | - | - | - | - | - | - | - | - | - | - | - | - | - |
| | B/A | % | 35.2 | 35.3 | 35.4 | 35.6 | 35.4 | 43.8 | 69.0 | 42.2 | 48.1 | 35.1 | 35.4 | 35.4 | 37.1 |
| | C/B | - | 0.38 | 1.15 | 1.92 | 3.85 | 1.92 | 5.00 | 5.00 | 3.33 | 3.29 | 0 | 1.92 | 1.92 | 15.00 |
| Evaluation | UL94 | - | V-0 | V-0 | V-0 | V-0 | V-0 | V-0 | V-0 | V-0 | V-0 | V-2 | V-0 | V-2 | V-0 |
| | Dispersibility evaluation 1 — Dispersibility | % | 20.4 | 15.4 | 13.3 | 14.3 | 18.4 | 15.8 | 10.0 | 0 | 0 | 22.6 | 26.6 | 25.5 | - |
| | Dispersibility evaluation 1 — Dispersibility ratio | % | 90 | 68 | 59 | 63 | 81 | 70 | 44 | 0 | 0 | 100 | 118 | 113 | - |
| | Dispersibility evaluation 2 | - | - | - | - | B | - | - | - | - | - | A | - | - | D |
| | Flexural modulus | GPa | 2.15 | 2.09 | 2.10 | 2.16 | 2.14 | 2.05 | 2.47 | 2.35 | 2.29 | 2.17 | 2.15 | 2.07 | 1.81 |
| | Flexural modulus ratio | % | 99 | 96 | 97 | 100 | 98 | 94 | 114 | 108 | 105 | 100 | 99 | 95 | 83 |
| | Tensile strength at yield | MPa | 25 | 25 | 24 | 24 | 24 | 24 | 20 | 24 | 23 | 25 | 25 | 26 | 21 |
| | Tensile strain at break | % | 31 | 42 | 43 | 40 | 35 | 45 | 29 | 54 | 38 | 23 | 24 | 15 | 46 |
| | Tensile strain at break ratio | % | 135 | 183 | 187 | 174 | 152 | 196 | 125 | 233 | 166 | 100 | 104 | 65 | 198 |

In Table 1, B/A is the mass ratio (%) of the phosphorus-containing flame retardant (B) to the thermoplastic resin (A) (100 %). C/B is the mass ratio (%) of the copolymer (C) to the phosphorus-containing flame retardant (B) (100 %) (the same hereinafter).

The molded products of the resin compositions of Examples 1 to 9 containing the copolymer (C) (C-1 or C-2) of an $\alpha$-olefin and an unsaturated carboxylic acid were superior in flame retardancy and flame retardant dispersibility to the molded product of the resin composition of Comparative Example 1 not containing the copolymer (C). Further, in Examples 1 to 9, sufficient flexural modulus and tensile strength at yield were shown, and the tensile strain at break was improved as well due to the improved flame retardant dispersibility.

Furthermore, in Examples 1 to 9, the test results of the UL94 standard were all V-0, which demonstrates that the resin compositions of Examples 1 to 9 were those which can suppress dripping during burning.

On the other hand, the molded product of the resin composition of Comparative Example 2, in which maleic anhydride-modified polyethylene was blended instead of the copolymer (C), was excellent in the flame retardancy but inferior in the flame retardant dispersibility. Further, it can be seen that, in this comparative example, the tensile strain at break ratio was small, indicating inferior mechanical strength.

The molded product of the resin composition of Comparative Example 3, in which the acid-modified polyethylene was blended instead of the copolymer (C), was inferior in the flame retardancy and the flame retardant dispersibility. Further, it can be seen that, in this comparative example, the tensile strain at break ratio was small, indicating inferior mechanical strength.

In Comparative Example 4, in which the ratio of the copolymer (C) to the phosphorus-containing flame retardant (B) was too high, the flame retardant was dispersed better than in Example 4, but the flexural modulus decreased significantly, which demonstrates that the inherent properties of polypropylene were significantly impaired.

[Combustion heat release comparison test by cone calorimeter]

The raw materials shown in Table 2 were blended at the ratios shown in Table 2 and mixed by hand blending. The resulting was melt-kneaded using a $\varphi$30 mm co-rotating twin-screw extruder (model name "BT-30", manufactured by Research Laboratory of Plastics Technology Co., Ltd., L/D = 30) at a screw rotation speed of 250 rpm and a cylinder temperature of 200 °C to obtain a resin composition.

For the obtained resin composition, a test piece for evaluation of flame retardant dispersibility was prepared in the same manner as in Example 1, and dispersibility evaluation 1 was implemented to determine the dispersibility and the dispersibility ratio. The results are shown in Table 2.

The obtained resin composition was injection molded using a 100t injection molding machine (model name "SE-100DU", manufactured by Sumitomo Heavy Industries, Ltd.) at a molding temperature of 200 °C to obtain a molded product (100 $\times$ 100 $\times$ 3 mm square plate). With respect to the obtained molded product, combustion heat release was evaluated by a cone calorimeter. The results are shown in Table 2.

[Table 2]

| | | | | | Example | | | Comparative Example | |
|---|---|---|---|---|---|---|---|---|---|
| | | | | | 3 | 10 | 11 | 1 | 5 |
| Resin composition | | A-1 | | % | 73.5 | 75.5 | 79.5 | 74 | 80 |
| | | A-2 | | % | - | - | - | - | - |
| | | B | | % | 26 | 24 | 20 | 26 | 20 |
| | | C-1 | | % | 0.5 | 0.5 | 0.5 | - | - |
| | | C-2 | | % | - | - | - | - | - |
| | | C-3 | | % | - | - | - | - | - |
| | | C-4 | | % | - | - | - | - | - |
| B/A | | | | % | 35.4 | 31.8 | 25.2 | 35.1 | 25.0 |
| C/B | | | | % | 1.92 | 2.08 | 2.50 | 0 | 0 |
| Evaluation | Dispersibility evaluation 1 | Dispersibility | | % | 13.3 | 14.3 | 11.0 | 22.6 | 25.4 |
| | | Dispersibility ratio | | % | 59 | 63 | 49 | 100 | 116 |
| | Total heat release | | | $MJ/m^2$ | 64 | 62 | 68 | 82 | 81 |
| | Maximum heat release rate | | | $kW/m^2$ | 150 | 170 | 187 | 194 | 211 |

The comparison of the combustion heat release values determined by the cone calorimeter shown in Table 2 also reveals that Examples 3, 10 and 11 containing the copolymer (C) of an α-olefin and an unsaturated carboxylic acid showed less total heat release and less maximum heat release rate than Comparative Examples 1 and 5 not containing the copolymer (C), which demonstrates that the flame retardancy was excellent in Examples 3, 10 and 11.

[Industrial Applicability]

The resin composition of the present invention enables production of a molded product in which a phosphorus-containing flame retardant is well dispersed and which is excellent in terms of not only flame retardancy but also mechanical strength and flexural modulus. Since the molded product obtained using the resin composition of the present invention is excellent in terms of not only flame retardancy but also mechanical strength and flexural modulus, the molded product can be suitably used as molded materials, cables, etc., in the field of automobiles, OA equipment such as printers, electrical/electronic devices such as mobile phones, and the like.

**Claims**

1.  A resin composition comprising a thermoplastic resin (A), a phosphorus-containing flame retardant (B), and a copolymer (C) of an α-olefin and an unsaturated carboxylic acid, wherein:

    a ratio of the phosphorus-containing flame retardant (B) to the thermoplastic resin (A) is 5 % by mass or more and 400 % by mass or less, and
    a ratio of the copolymer (C) to the phosphorus-containing flame retardant (B) is 10 % by mass or less.

2.  The resin composition according to claim 1, wherein a proportion of the thermoplastic resin (A) to a total mass of the resin composition is 20 % by mass or more and 85 % by mass or less.

3.  The resin composition according to claim 1 or 2, wherein the copolymer (C) is a copolymer of an α-olefin and maleic anhydride.

4. The resin composition according to any one of claims 1 to 3, wherein the thermoplastic resin (A) is a polyolefin resin.

5. A molded product comprising the resin composition of any one of claims 1 to 4.

## INTERNATIONAL SEARCH REPORT

| | International application No. |
|---|---|
| | PCT/JP2021/020189 |

**A. CLASSIFICATION OF SUBJECT MATTER**
C08K 5/49(2006.01)i; C08L 23/00(2006.01)i; C08L 23/10(2006.01)i; C08K 3/32(2006.01)i
FI: C08L23/00; C08K5/49; C08L23/10; C08K3/32
According to International Patent Classification (IPC) or to both national classification and IPC

**B. FIELDS SEARCHED**

Minimum documentation searched (classification system followed by classification symbols)
C08K3/00-13/08; C08L1/00-101/14

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-146204 A (TEIJIN CHEMICALS LTD.) 22 May 2002 (2002-05-22) claims 1-5, paragraphs [0014], [0072]-[0075], examples 8, 9, 11-15 | 1-5 |
| X A | JP 2011-219553 A (TEIJIN CHEMICALS LTD.) 04 November 2011 (2011-11-04) claims 1-5, paragraphs [0009], [0051]-[0057], examples 2-4, 6-9 | 1-3, 5 <br> 4 |
| X A | JP 2010-144129 A (TEIJIN CHEMICALS LTD.) 01 July 2010 (2010-07-01) claims 1-10, paragraphs [0017], [0053]-[0058], example 23 | 1-3, 5 <br> 4 |
| X A | JP 2007-016093 A (TEIJIN CHEMICALS LTD.) 25 January 2007 (2007-01-25) claims 1-18, paragraphs [0010], [0022]-[0029], [0041]-[0045], example 14 | 1-3, 5 <br> 4 |

☒ Further documents are listed in the continuation of Box C.    ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 16 July 2021 (16.07.2021) | 27 July 2021 (27.07.2021) |

| Name and mailing address of the ISA/ <br> Japan Patent Office <br> 3-4-3, Kasumigaseki, Chiyoda-ku, <br> Tokyo 100-8915, Japan | Authorized officer <br><br> Telephone No. |
|---|---|

Form PCT/ISA/210 (second sheet) (January 2015)

**INTERNATIONAL SEARCH REPORT**

International application No.

PCT/JP2021/020189

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2002-129003 A (TEIJIN CHEMICALS LTD.) 09 May | 1-3, 5 |
| A | 2002 (2002-05-09) claims 1-6, paragraphs [0062], [0066]-[0071], [0148], examples 1-4 | 4 |
| A | JP 2012-207131 A (YOSHIZAWA LIME INDUSTRY CO., LTD.) 25 October 2012 (2012-10-25) claims 1-9, examples | 1-5 |
| A | JP 04-264147 A (MITSUBISHI KASEI CORP.) 18 September 1992 (1992-09-18) claims 1-2, examples | 1-5 |

Form PCT/ISA/210 (continuation of second sheet) (January 2015)

| International application No. |
| --- |
| PCT/JP2021/020189 |

| Patent Documents referred in the Report | Publication Date | Patent Family | Publication Date |
| --- | --- | --- | --- |
| JP 2002-146204 A | 22 May 2002 | (Family: none) | |
| JP 2011-219553 A | 04 Nov. 2011 | (Family: none) | |
| JP 2010-144129 A | 01 Jul. 2010 | CN 101759990 A claims 1-10, paragraphs [0042], [0094]-[0105], example 23 | |
| JP 2007-016093 A | 25 Jan. 2007 | (Family: none) | |
| JP 2002-129003 A | 09 May 2002 | (Family: none) | |
| JP 2012-207131 A | 25 Oct. 2012 | (Family: none) | |
| JP 04-264147 A | 18 Sep. 1992 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020093089 A
- JP 2021044430 A
- JP 2013119575 A
- WO 201196596 A
- JP HEI5117452 A
- JP 2014091753 A
- US 4379910 A

- JP SHO60258263 A
- JP SHO63154744 A
- JP HEI4272957 A
- JP HEI06220210 A
- JP HEI08188653 A
- JP HEI995583 A
- JP HEI1129679 A